# DEMANDE DE BREVET EUROPEEN

(11) **EP 1 605 632 A2**
(43) Date de publication de la demande: **14.12.2005**
(21) Numéro de dépôt: 05103089.8
(22) Date de dépôt: 18.04.2005
(51) Int. Cl.: H04L 12/26

(54) **Corrélation de mesures passives de type bout-en-bout, au moyen de filtres hiérarchisés**

(30) Priorité: 27.04.2004 FR 0450792
(71) Demandeur: ALCATEL, 75008 Paris (FR)
(72) Inventeur: Delegue, Gérard, 94230, CACHAN (FR); Martinot, Olivier, 91210, DRAVEIL (FR); Betge-Brezetz, Stéphane, 75015, PARIS (FR); Marilly, Emmanuel, 91240, SAINT-MICHEL-SUR-ORGE (FR); Saidi, Mohamed Adel, 92160, ANTONY (FR); Squedin, Sylvain, 91620, NOZAY (FR)
(74) Mandataire: Vigand, Régis Louis Michel

(57) **Abrégé**

Un dispositif (DGM) est dédié à la gestion de mesures de paramètres, de type bout-en-bout, pour un système de gestion (NMS) d'un réseau de communications orienté paquets comportant une multiplicité d'équipements périphériques (EP). Ce dispositif (DGM) comprend i) des moyens de gestion (MG) chargés de transmettre à des équipements périphériques (EP) choisis des définitions de filtre choisies, associées à des identifiants de filtre choisis, ii) des moyens de corrélation chargés de corréler chaque notification comportant un identifiant de filtre choisi, reçue d'un équipement périphérique d'entrée (EP-1), avec un jeu choisi de notifications reçues d'équipements périphériques de sortie (EP-2, EP-3) et comportant un identifiant de filtre présentant au moins un lien de parenté avec l'identifiant de filtre choisi, et iii) des moyens de calcul (MCM) chargés de délivrer des mesures de paramètres à partir des valeurs contenues dans les notifications corrélées.

## Description

L'invention concerne le domaine des réseaux de communications gérés et orientés paquets, et plus précisément l'obtention de mesures passives de paramètres de trafic de type bout-en-bout au sein de tels réseaux.

On entend ici par « mesures » aussi bien celles liées à la gestion d'un réseau, que celles liées à la gestion de service, et notamment à la gestion de la qualité de service (ou QoS).

Par ailleurs, on entend ici par « trafic » aussi bien des flux de paquets de données que des paquets de données d'un flux. De plus, on entend ci-après par « trafic de type bout-en-bout » un trafic traversant intégralement un ensemble de réseaux, un réseau particulier ou au moins un domaine ou sous-domaine d'un réseau à contexte multidomaines.

Comme le sait l'homme de l'art, les opérateurs des réseaux gérés ont fréquemment besoin de disposer de valeurs de paramètres (ou caractéristiques) de trafic, tels que la gigue (ou « jitter »), le taux de perte de paquets et le retard de transmission (ou « delay »), avec une certaine précision, afin de pouvoir contrôler le fonctionnement de leurs réseaux. Cela leur permet notamment de contrôler la qualité de service (ou QoS) qu'ils ont garantie à leurs clients dans le cadre d'accords de niveau de service (ou SLAs pour « Service Level Agreements »).

L'obtention des valeurs des paramètres de trafic peut s'effectuer de façon active ou passive au niveau de certains éléments (ou équipements) de réseau. L'invention concerne spécifiquement les mesures passives effectuées sur des trafics réels à contrôler.

Ces mesures passives, qui permettent de déterminer les caractéristiques effectives de trafics réels, nécessitent la collection d'un volume important de données au niveau des équipements périphériques des réseaux, qui constituent les points d'entrée (ou « ingress points ») et les points de sortie (ou « egress points ») des trafics (ou flux), puis la corrélation de toutes les données collectées.

Afin d'éviter la surcharge du réseau induite par l'augmentation quasi-permanente du volume de données collectées, en terme d'utilisation des ressources, il a notamment été proposé de placer en dérivation sur chaque lien de transmission de chaque équipement périphérique, tel qu'un routeur, un boîtier d'analyse de trafic chargé de filtrer et d'échantillonner les données de mesure. Cela permet certes de réduire notablement le nombre de données de mesure transmises au gestionnaire du réseau, mais cela induit dans le même temps une diminution sensible de la précision des mesures.

L'invention a pour but d'améliorer la situation.

Elle propose à cet effet un dispositif dédié à la gestion de filtrage de trafics (de flux de données) pour un équipement périphérique, d'un réseau de communications orienté paquets, comprenant des moyens d'analyse de trafic chargés de déterminer des valeurs représentatives de paramètres choisis de trafics reçus, en fonction d'au moins un filtre de trafic choisi, et de transmettre ces valeurs sous la forme de notifications à un système de gestion du réseau afin qu'il détermine des mesures des paramètres choisis.

Ce dispositif de gestion de filtrage se caractérise par le fait qu'il comprend des moyens de contrôle chargés de fournir aux moyens d'analyse de trafic chaque filtre de trafic choisi, et des moyens de traitement chargés d'adjoindre un identifiant de filtre choisi à chaque notification, générée par les moyens d'analyse consécutivement à une analyse de trafic correspondant au filtre choisi, avant qu'elle ne soit transmise au système de gestion de réseau.

L'invention propose également un équipement périphérique, pour un réseau de communications orienté paquets, comprenant, d'une part, des moyens d'analyse de trafic chargés de déterminer des valeurs représentatives de paramètres choisis de trafics reçus, en fonction d'au moins un filtre de trafic choisi, et de transmettre ces valeurs sous la forme de notifications à un système de gestion du réseau afin qu'il détermine des mesures des paramètres choisis, et d'autre part, un dispositif de gestion de filtrage de trafics du type de celui présenté ci-avant.

L'invention propose en outre un dispositif dédié à la gestion de mesures de paramètres, de type bout-en-bout, pour un système de gestion d'un réseau de communications orienté paquets comportant une multiplicité d'équipements périphériques du type de celui présenté ci-avant, et comportant des moyens de calcul chargés de délivrer des mesures de paramètres à partir de valeurs représentatives de ces paramètres, contenues dans des notifications provenant d'équipements périphériques dits d'entrée et de sortie.

Ce dispositif de gestion de mesures de paramètres se caractérise par le fait qu'il comprend, d'une part, des moyens de gestion chargés de transmettre à des équipements périphériques choisis des définitions de filtre choisies, associées à des identifiants de filtre choisis, et d'autre part, des moyens de corrélation chargés de corréler chaque notification comportant un identifiant de filtre choisi, reçue d'un équipement périphérique d'entrée, avec un jeu choisi de notifications reçues d'équipements périphériques de sortie et comportant un identifiant de filtre présentant au moins un lien de parenté avec l'identifiant de filtre choisi, afin que les moyens de calcul puissent délivrer des mesures de paramètres à partir des valeurs contenues dans les notifications corrélées.

Ce dispositif peut comporter des caractéristiques complémentaires qui peuvent être prises séparément ou en combinaison, et notamment :
- des moyens de configuration chargés de définir les filtres en fonction d'identifiants de flux de trafics à filtrer et de désignations d'équipements périphériques d'entrée et d'équipements périphériques de sortie au niveau desquels les filtres doivent être utilisés,
- des moyens d'ordonnancement chargés d'attribuer à chaque flux l'identifiant associé,
- des premiers moyens de mémorisation, couplés aux moyens de corrélation et chargés de stocker les filtres selon une hiérarchie prenant en compte leurs liens de parenté et en correspondance de leurs identifiants de filtre respectifs. Dans ce cas, les moyens d'ordonnancement sont préférentiellement chargés d'établir la hiérarchie entre les flux et de communiquer aux premiers moyens de mémorisation les flux hiérarchisés et les identifiants de filtre associés,
- des moyens de collection chargés de recevoir les notifications des équipements périphériques d'entrée et de sortie et de classer ces notifications reçues en fonction de leur origine,
- des seconds moyens de mémorisation, couplés aux moyens de collection et aux moyens de corrélation, et chargés de stocker les notifications en fonction de leur origine,
- ses moyens de corrélation peuvent être capables d'extraire des seconds moyens de mémorisation une notification, dite d'entrée, dont l'origine correspond à un équipement périphérique d'entrée choisi, puis de déterminer dans les premiers moyens de mémorisation les identifiants de filtre qui présentent un lien de parenté avec l'identifiant de filtre de la notification extraite, puis d'extraire des seconds moyens de mémorisation les notifications, dites de sortie, dont l'origine correspond à un équipement périphérique de sortie et qui comportent un identifiant de filtre présentant un lien de parenté avec celui de la notification d'entrée précédemment extraite, afin de corréler ces notifications d'entrée et de sortie. Dans ce cas, les moyens de corrélation peuvent être également agencés de manière à sélectionner, en vue de la corrélation, certaines des notifications de sortie, qui sont stockées dans les seconds moyens de mémorisation, en fonction d'informations contenues dans une matrice de flux,
- des moyens de mise à jour chargés de supprimer des seconds moyens de mémorisation chaque notification de sortie qui correspond à une date de transmission antérieure à la date de transmission d'une notification d'entrée objet d'une corrélation par les moyens de corrélation,
- des moyens de suppression chargés de supprimer des notifications d'entrée parvenues depuis un délai prédéterminé, par exemple au moyen de temporisateur(s) (ou « timer(s) »).

L'invention propose enfin un système de gestion de réseau (ou NMS pour « Network Management System »), pour un réseau de communications orienté paquets comportant une multiplicité d'équipements périphériques du type de celui présenté ci-avant, et comprenant un dispositif de gestion de mesures de paramètres du type de celui présenté ci-avant.

L'invention est particulièrement bien adaptée, bien que de façon non exclusive aux réseaux de communications à protocole Internet (ou IP) et aux réseaux IP/(G)MPLS.

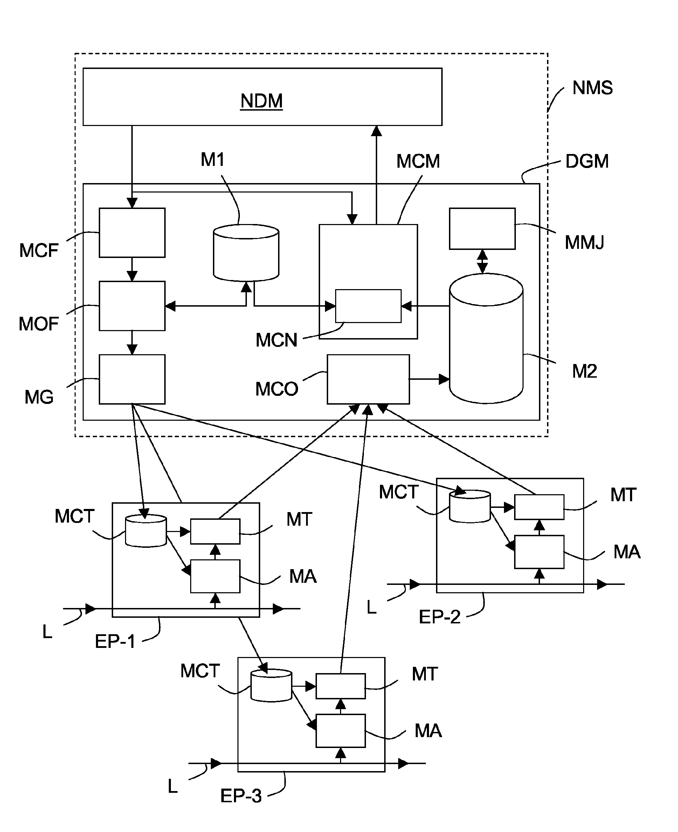

D'autres caractéristiques et avantages de l'invention apparaîtront à l'examen de la description détaillée ci-après, et du dessin annexé, sur lequel l'unique figure illustre de façon schématique un exemple de réalisation d'un système de gestion de réseau comportant un dispositif de gestion de mesures de paramètres selon l'invention, couplé à plusieurs équipements de réseau comportant un dispositif de gestion de filtrage selon l'invention.

Le dessin annexé pourra non seulement servir à compléter l'invention, mais aussi contribuer à sa définition, le cas échéant.

L'invention a pour objet de permettre la mesure passive de paramètres de trafics, de type bout-en-bout, au sein d'un réseau de communications géré, orienté paquets.

Dans ce qui suit, on considèrera que le réseau de communications est un réseau à protocole internet (ou réseau IP), c'est-à-dire un contexte multidomaines constitué d'une somme de domaines et/ou de sous-domaines IP raccordés les uns aux autres. Mais, l'invention n'est pas limitée à ce seul type de réseau géré. Elle concerne également et notamment les réseaux de type IP/(G)MPLS.

Un réseau IP peut être, d'une façon très schématique mais suffisante à la compréhension de l'invention, assimilé à un ensemble d'équipements d'accès, tels que des noeuds, raccordés entre eux, directement ou indirectement, de manière à permettre à des terminaux de communication et/ou à des réseaux de s'interfacer.

On entend ici par « équipement d'accès » (ou équipement de réseau) notamment des routeurs périphériques (ou « edge routers »), du type de ceux illustrés schématiquement sur l'unique figure, et des routeurs de coeur (ou « core routers »).

Par ailleurs, on entend par « terminal de communication » tout équipement de réseau capable d'échanger des paquets de données, comme par exemple un ordinateur portable ou fixe, un téléphone fixe ou mobile, un assistant personnel numérique (ou PDA pour « Personal Digital Assistant »), ou un serveur.

Les terminaux de communication sont habituellement raccordés chacun à l'un des routeurs périphériques EP, qui leurs servent de noeud d'accès au réseau IP, et les routeurs périphériques EP sont généralement reliés entre eux par l'intermédiaire d'un ou plusieurs routeurs de coeur.

Il est rappelé que dans un réseau IP, chaque domaine ou sous-domaine possède ses propres routeurs périphériques et ses propres routeurs de coeur. Il est par ailleurs rappelé que dans un réseau IP/(G)MPLS, les équipements de réseau sont appelés « Label Switch Routers » et se présentent soit sous la forme de routeurs, soit sous la forme de commutateurs ATM contrôlés par une fonction de routage.

L'invention concerne les équipements de réseau périphériques EP, comme par exemple des routeurs périphériques. Mais, elle concerne également des éléments de réseau tels que des interfaces, notamment celles situées au dessus des piles IP ou MPLS de chaque interface physique.

Dans l'exemple illustré, seuls trois équipements périphériques EP-1 à EP-3 ont été représentés, mais leur nombre peut prendre n'importe quelle valeur supérieure ou égale à deux.

Comme cela est illustré sur l'unique figure, dans un réseau IP les équipements de réseau, et notamment les équipements périphériques EP, sont couplés à un système de gestion de réseau ou NMS (pour « Network Management System »). Ce système de gestion de réseau NMS, également appelé système d'exploitation du réseau, permet notamment au gestionnaire (ou superviseur) du réseau de gérer les équipements de réseau qui le constituent. A cet effet, les équipements de réseau sont agencés de manière à pouvoir échanger des données selon un protocole de gestion de réseau avec le système de gestion NMS, comme par exemple le protocole SNMP (pour « Simple Network Management Protocol » RFC 2571-2580).

Comme indiqué ci-avant, l'invention a pour but de permettre la mesure passive de paramètres choisis de trafics de type bout-en-bout.

Un trafic de type bout-en-bout est un flux de paquets de données ou un paquet de données d'un flux qui traverse intégralement plusieurs réseaux, ou un réseau, ou au moins un domaine ou sous-domaine d'un réseau à contexte multidomaines, tel qu'un réseau IP. On entend ici par « traverser intégralement » le fait de pénétrer dans un réseau ou un domaine par l'un de ses routeurs périphériques EP, dit routeur d'entrée (ou « ingress router »), par exemple EP-1, et de ressortir de celui-ci par un autre de ses routeurs périphériques EP, dit routeur de sortie (ou « egress router»), par exemple EP-2 ou EP-3.

Les mesures de bout-en-bout sont effectuées en deux points d'extrémité du réseau, indépendamment de ce qui se trouve intercalé entre ces deux points de mesure. Par conséquent, les deux points de mesure peuvent être placés à deux extrémités d'un réseau, ou d'une fédération de réseau, ou encore d'un ou plusieurs domaines d'un réseau multidomaines.

La détermination des valeurs représentatives des paramètres de trafics de type bout-en-bout s'effectue par l'analyse des flux de paquets de données ou simplement les (flots de) paquets de données des flux au niveau des routeurs périphériques EP du réseau IP. Ces valeurs sont transmises au système de gestion de réseau NMS sous la forme de notifications.

Dans ce qui suit, on considère à titre d'exemple illustratif que les mesures passives, objet des analyses de flux, portent sur des paramètres de trafics de type bout-en-bout concernant la gestion de service, et plus particulièrement la gestion de la qualité de service (QoS).

Chaque routeur périphérique EP, concerné par des mesures de bout-en-bout, comporte un module d'analyse de trafic MA (également appelé agent d'observation) chargé de déterminer des valeurs représentatives de paramètres choisis de trafics de type bout-en-bout qui lui sont transmis. Ces analyses sont de type passif du fait qu'elles portent sur des trafics réels. Elles portent par exemple sur la gigue (ou « jitter ») du réseau IP, le nombre ou le taux de perte de paquets, ou le retard ou délai (« delay ») de transmission.

Le module d'analyse MA est préférentiellement implanté à l'intérieur du routeur périphérique EP, mais il peut également être raccordé à celui-ci.

Dans un routeur périphérique classique, le module d'analyse MA est agencé de manière à transmettre les valeurs qu'il détermine à un module de calcul du système de gestion de réseau NMS, par exemple implanté dans un dispositif de gestion de mesures (constituant un étage de traitement), tel qu'un serveur de gestion. Un tel module de calcul est alors chargé de mesurer, à l'aide de modèles mathématiques bien connus de l'homme de l'art et appelés métriques, les paramètres des trafics de type bout-en-bout qui sont représentés par les valeurs reçues des routeurs périphériques EP concernés par ces trafics. Généralement, ce module de calcul est non seulement capable de mesurer des paramètres, mais également de déterminer des statistiques associées (maximum, minimum, valeur moyenne, variation moyenne, écart-type, ...). Par ailleurs, le module de calcul est généralement raccordé à une interface graphique, de type GUI (pour « Graphical User Interface »), du système de gestion de réseau NMS, permettant à ce dernier de lui transmettre les métriques et d'afficher sur un écran les résultats des mesures en temps réel ou en différé.

Selon l'invention et comme illustré sur l'unique figure, le dispositif de gestion de mesures DGM du système de gestion de réseau NMS comporte non seulement un module de calcul MCM, mais également au moins un module de gestion MG, chargé de transmettre à des équipements périphériques EP choisis des définitions de filtre choisies, associées à des identifiants de filtre choisis, ainsi qu'un module de corrélation MCN chargé de corréler chaque notification provenant d'un équipement périphérique d'entrée EP-1 avec un jeu choisi de notifications reçues d'équipements périphériques de sortie EP-2, EP-3.

Plus précisément, selon l'invention chaque notification transmise par un équipement (routeur) périphérique EP comporte non seulement au moins une valeur représentative d'un paramètre choisi, mais également un identifiant du filtre utilisé par son module d'analyse MA pour déterminer cette valeur.

Chaque routeur périphérique EP, concerné par des mesures de bout-en-bout, est en effet agencé de manière à filtrer (ou échantillonner) les trafics de type bout-en-bout reçus par les interfaces d'entrée IE, en fonction de définitions de filtre transmises par le module de gestion MG du dispositif de gestion de mesures DGM du système de gestion de réseau NMS, afin de transmettre les trafics filtrés au module d'analyse MA (les autres trafics poursuivant leur trajet et quittant le routeur par ses interfaces de sortie). En d'autres termes, le module d'analyse MA analyse exclusivement les trafics (flux et/ou paquets) filtrés qui lui sont transmis.

Le filtrage de flux de paquets consiste à sélectionner certains flux parmi tous ceux reçus sur les interfaces d'entrée. Les deux routeurs périphériques d'entrée, ici EP-1, et de sortie, ici EP-2 ou EP-3, concernés par un trafic de type bout-en-bout, objet de mesure(s), doivent filtrer (ou sélectionner) le ou les mêmes flux.

D'une manière générale, le filtrage de flux consiste à échantillonner des flux en fonction de la classe à laquelle ils appartiennent. On entend ici par « classe de flux » des flux comportant par exemple, pour le protocole IP, un même champ DSCP, ou les mêmes champs SRC/DST, ou encore les mêmes champs DSCP/SRC/DST. On peut également utiliser d'autres champs IP, comme par exemple ceux contenant les ports destination et les ports source.

Par exemple, l'échantillonnage de flux consiste à analyser la classe d'appartenance des flux à un ou plusieurs niveaux de protocole (IP, UDP/TCP, http, ...) choisis.

L'analyse peut donc notamment porter sur les contenus de champs placés dans l'entête des paquets appartenant aux flux reçus, comme par exemple les champs dédiés à la classe du flux (utilisée pour différencier entre eux des flux appartenant à des sous-domaines ou domaines différents du réseau IP). Ces champs de classe comportent généralement un identifiant de domaine source, un identifiant de domaine destinataire, un identifiant DSCP et un identifiant de protocole de transmission.

Les contenus de ces champs sont alors comparés aux contenus des champs de classe définis par les définitions de filtre, puis les contenus des champs d'identification de flux d'une classe donnée (utilisés pour différencier entre eux des flux d'un même type) sont comparés aux contenus des champs d'identification de flux définis par les définitions de filtre. Bien entendu, il ne s'agit là que d'un exemple d'analyse. On peut en effet analyser d'autres champs des protocoles des niveaux supérieurs, comme par exemple les niveaux TCP et HTTP sur TCP/IP.

D'une manière générale, le filtrage de paquets consiste à échantillonner des flots de paquets appartenant à au moins un flux d'une classe choisie.

Selon l'invention, chaque équipement périphérique EP, concerné par des mesures de bout-en-bout, comprend tout d'abord, en complément de son module d'analyse MA, un module de contrôle MCT chargé de fournir au module d'analyse de trafic MA un ou plusieurs filtres choisis, transmis par le module de gestion MG du dispositif de gestion de mesures DGM sous la forme de définitions de filtre associées chacune à un identifiant de filtre. Chaque équipement périphérique EP comprend en outre un module de traitement MT, couplé à ses module de contrôle MCT et module d'analyse MA, et chargé d'adjoindre à chaque notification générée par le module d'analyse MA, consécutivement à une analyse de trafic correspondant à un filtre choisi, l'identifiant de filtre associé, avant que cette notification ne soit transmise au dispositif de gestion de mesures DGM du système de gestion de réseau NMS.

On entend ici par « adjoindre » le fait d'ajouter à une notification un champ comportant une valeur représentative du filtre utilisé, par exemple dans son entête.

Les définitions des filtres, qui sont transmises de façon sélective par le module de gestion MG aux équipements périphériques EP du réseau IP, peuvent être directement fournies audit module de gestion MG par le superviseur du réseau via l'interface graphique. Mais, comme illustré, il est préférable que le dispositif de gestion de mesures DGM comprenne un module de configuration MCF chargé de définir les différents filtres. Les définitions des filtres peuvent être ainsi élaborées en fonction d'informations fournies par le superviseur du réseau via l'interface graphique. Ces informations sont par exemple des identifiants de flux de trafics à filtrer et des désignations d'équipements périphériques d'entrée (EP-1) et d'équipements périphériques de sortie (EP-2, EP-3) au niveau desquels les filtres doivent être utilisés.

Ces définitions de filtre sont préférentiellement générées par le module de configuration MCF lorsque le NMS lui transmet une requête de mesure de bout-en-bout spécifique.

Par ailleurs, comme illustré, il est également préférable que le dispositif de gestion de mesures DGM comprenne un module d'ordonnancement MOF chargé d'attribuer un identifiant de filtre à chaque définition de flux, par exemple fournie par le module de configuration MCF auquel il est alors couplé, tout comme au module de gestion MG.

Ce module d'ordonnancement MOF est par ailleurs préférentiellement chargé d'établir une hiérarchie entre les flux. Cette hiérarchie prend avantageusement en compte les liens de parenté qui existent entre certains flux.

Un exemple illustratif de classement hiérarchique est donné ci-dessous :
Filtre n°1 : @SRC entre 192.168.30.0 et 192.168.30.255
Filtre n°2 : @SRC entre 192.168.30.10 et 192.168.30.20
Filtre n°3 : @SRC entre 192.168.30.21 et 192.168.30.30

Dans cet exemple, les filtres n°2 et n°3 constituent des sous-ensembles du filtre n°1. Il existe donc un lien de parenté, d'une part entre le filtre n°1 et le filtre n°2, et d'autre part entre le filtre n°1 et le filtre n°3.

Ce classement hiérarchique est notamment destiné à permettre une réduction du nombre de filtres à mettre en oeuvre dans chaque équipement périphérique EP. En effet, en comparant les définitions des différents filtres, qui sont destinés à être mis en oeuvre dans un même équipement périphérique EP, on peut déterminer celui ou ceux qui constituent des sous-ensembles de l'un d'entre eux de manière à ne déployer que celui ou ceux qui ne présentent pas de lien de parenté avec un autre filtre. Par exemple, dans le cas précité on ne déploiera dans l'équipement périphérique EP concerné que le filtre n°1 et non le filtre n°2 qui en constitue un sous-ensemble, et cela quel que soit le critère de filtrage utilisé dans le filtre n°2 (adresses de destination, champ DSCP, etc).

Afin de stocker les définitions des filtres hiérarchisés, en correspondance de leurs identifiants de filtre respectifs, on prévoit, comme illustré, une première mémoire M1 couplée au module d'ordonnancement MOF. Il est important de noter qu'à chaque définition de filtre correspond un identifiant de filtre unique.

Dans un dispositif de gestion de mesures DGM selon l'invention, c'est donc le module d'ordonnancement MOF qui fournit au module de gestion MG les définitions des filtres associées à leurs identifiants respectifs, et c'est le module de gestion MG qui est chargé de transmettre les définitions de filtre et les identifiants associés aux équipements périphériques EP concernés, compte tenu des instructions du superviseur du réseau IP.

Afin de collecter les notifications transmises par les équipements périphériques EP, et plus précisément par leurs modules de traitement MT respectifs, le dispositif de gestion de mesures DGM, selon l'invention, comprend préférentiellement un module de collection MCO. Ce dernier est de préférence également chargé de classer les notifications d'entrée et de sortie reçues des équipements périphériques d'entrée (EP-1) et de sortie (EP-2, EP-3) en fonction de leurs origines respectives.

L'origine d'une notification permet en effet de déterminer si le flux filtré, associé à l'identifiant de filtre qu'elle contient, est un flux entrant, c'est-à-dire parvenu au niveau d'un équipement périphérique d'entrée, ou un flux sortant, c'est-à-dire parvenu au niveau d'un équipement périphérique de sortie.

Les notifications ainsi classées sont préférentiellement stockées en fonction de leurs origines respectives dans une seconde mémoire M2, couplée au module de collection MCO. Par exemple, la seconde mémoire M2 est subdivisée en zones dédiées chacune aux notifications provenant d'un même équipement périphérique EP. Chaque zone peut être éventuellement subdivisée en une sous-zone dédiée aux notifications d'entrée et une sous-zone dédiée aux notifications de sortie.

Le module de corrélation MCN du dispositif de gestion de mesures DGM est couplé soit au module de collection MCO, en l'absence de seconde mémoire M2, soit à la seconde mémoire M2 lorsqu'elle existe.

Comme indiqué précédemment, le module de corrélation MCN est chargé de corréler chaque notification d'entrée provenant d'un équipement périphérique d'entrée, par exemple EP-1, avec un jeu choisi de notifications de sortie provenant d'équipements périphériques de sortie, par exemple EP-2 et/ou EP-3. Plus précisément le module de corrélation MCN est chargé de corréler chaque notification d'entrée avec un jeu choisi de notifications de sortie comportant chacune au moins un lien de parenté avec l'identifiant de filtre contenu dans la notification d'entrée.

Pour ce faire, le module de corrélation MCN extrait tout d'abord de la seconde mémoire M2 une notification d'entrée dont l'origine correspond à un équipement périphérique d'entrée, par exemple EP-1, par lequel à transité un trafic objet d'une mesure à effectuer. Puis, il détermine l'identifiant de filtre qui est associé à cette notification d'entrée de manière à déterminer dans la première mémoire M1 tous les identifiants de filtre qui présentent un lien de parenté avec cet identifiant de filtre de la notification d'entrée. Cette opération est facilitée par le classement hiérarchisé des définitions de filtre dans la première mémoire M1.

Le module de corrélation MCN extrait ensuite de la seconde mémoire M2 les notifications de sortie qui comportent l'un des identifiants de filtre présentant un lien de parenté avec celui de la notification d'entrée, afin de les corréler à la notification d'entrée. La corrélation consiste à regrouper chaque notification de sortie correspondant à un flux ayant fait l'objet d'une notification d'entrée, et correspondant à une date de transmission postérieure à la date de transmission de la notification d'entrée, de sorte que le module de calcul MA puisse effectuer une mesure de bout-en-bout à partir des valeurs de paramètre contenues dans ces notifications corrélées et de l'algorithme de calcul (ou métrique) approprié. Les mesures sont ensuite transmises à un étage de gestion de mesure NDM, du système de gestion de réseau NMS.

Afin de faciliter la corrélation, le module de corrélation MCN peut éventuellement effectuer une sélection de certaines des notifications de sortie, stockées dans la seconde mémoire M2, en fonction d'informations contenues dans une matrice de flux (ou « flow matrix »). Une telle matrice de flux définit des relations entre équipements périphériques EP. Par exemple, dans un réseau IP VPN, la matrice de flux spécifie pour un flot appartenant à un VPN donné, les équipements périphériques qui constituent des points d'entrée et de sortie audit VPN.

Grâce à ces informations de flux, le module de corrélation MCN peut réduire notablement le nombre de zones de la seconde mémoire M2 parmi lesquelles il doit rechercher des notifications de sortie comportant des identifiants de filtre présentant un lien de parenté avec l'identifiant de filtre d'une notification d'entrée.

Dans l'exemple de réalisation illustré, le module de corrélation MCN fait partie du module de calcul MCM, mais cela n'est pas obligatoire. Il peut en effet être indépendant du module de calcul MCM, mais couplé à celui-ci de manière à l'alimenter en notifications corrélées.

Le dispositif de gestion de mesures DGM, selon l'invention, peut également comprendre un module de mise à jour MMJ, couplé à la seconde mémoire M2, et chargé d'observer le contenu de celle-ci afin de supprimer, de préférence de façon automatique, chaque notification de sortie qui correspond à une date de transmission antérieure à la date de transmission d'une notification d'entrée objet d'une corrélation par le module de corrélation MCN. Cela permet de supprimer les notifications au fur et à mesure de leur traitement et donc d'éviter de surcharger inutilement la seconde mémoire M2 tout en facilitant la corrélation.

Le dispositif de gestion de mesures DGM, selon l'invention, peut également comprendre, en complément du module de mise à jour MMJ ou à la place de celui-ci, un module de suppression (non représenté) couplé à la seconde mémoire M2 et chargé d'analyser les dates associées aux notifications d'entrée reçues afin de supprimer de cette seconde mémoire M2 les notifications d'entrée dont les dates associées sont dépassées depuis une durée (ou un délai) prédéterminée. Par exemple, le module de suppression peut comporter un ou plusieurs temporisateurs (ou « timers ») chargés chacun de décompter le temps écoulé et de délivrer un signal de déclenchement de suppression chaque fois que le temps écoulé est égal à une durée prédéterminée.

Le dispositif de gestion de filtrage DGF selon l'invention, et notamment ses modules de contrôle MCT et de traitement MT, le dispositif de gestion de mesures de paramètres DGM, et notamment ses modules de gestion MG, de calcul MCM, de configuration MCF, d'ordonnancement MOF, de corrélation MCN, de collection MCO et de mise à jour MMJ, ainsi qu'éventuellement ses premières M1 et secondes M2 mémoires, et le système de gestion de réseau NMS peuvent être réalisés sous la forme de circuits électroniques, de modules logiciels (ou informatiques), ou d'une combinaison de circuits et de logiciels.

L'invention permet de déployer un grand nombre de « sondes » d'analyse de trafic, sans que cela ne pénalise le réseau en terme d'utilisation des ressources pour la transmission des notifications. Par ailleurs, le nombre de notifications à corréler étant notablement réduit, il est possible d'effectuer des mesures de bout-en-bout en temps réel et de réduire le coût des processeurs de traitement du module de calcul. En outre, l'invention permet de réduire notablement le nombre de filtres implantés dans les équipements périphériques.

L'invention ne se limite pas aux modes de réalisation de dispositif de gestion de filtrage, de dispositif de gestion de mesures, et de système de gestion de réseau décrits ci-avant, seulement à titre d'exemple, mais elle englobe toutes les variantes que pourra envisager l'homme de l'art dans le cadre des revendications ci-après.

## Revendications

1. Dispositif de gestion de filtrage de trafics (DGF), pour un équipement périphérique (EP) d'un réseau de communications orienté paquets comprenant des moyens d'analyse de trafic (MA) propres à déterminer des valeurs représentatives de paramètres choisis de trafics reçus, en fonction d'au moins un filtre de trafic choisi, et à les transmettre sous la forme de notifications à un système de gestion (NMS) dudit réseau afin qu'il détermine des mesures desdits paramètres choisis, **caractérisé en ce qu'**il comprend des moyens de contrôle (MCT) agencés pour fournir auxdits moyens d'analyse de trafic (MA) chaque filtre de trafic choisi, et des moyens de traitement (MT) agencés pour adjoindre un identifiant de filtre choisi à chaque notification, générée par lesdits moyens d'analyse (MA) consécutivement à une analyse de trafic correspondant audit filtre choisi, avant sa transmission audit système de gestion (NMS).

2. Equipement périphérique (EP) pour un réseau de communications orienté paquets, comprenant des moyens d'analyse de trafic (MA) propres à déterminer des valeurs représentatives de paramètres choisis de trafics reçus, en fonction d'au moins un filtre de trafic choisi, et à les transmettre sous la forme de notifications à un système de gestion (NMS) dudit réseau (N) afin qu'il détermine des mesures desdits paramètres choisis, **caractérisé en ce qu'**il comprend un dispositif de gestion de filtrage de trafics (DGF) selon la revendication précédente.

3. Dispositif de gestion de mesures de paramètres (DGM), de type bout-en-bout, pour un système de gestion (NMS) d'un réseau de communications orienté paquets comportant une multiplicité d'équipements périphériques (EP) selon la revendication précédente, ledit dispositif (DGM) comportant des moyens de calcul (MCM) propres à délivrer des mesures de paramètres à partir de valeurs représentatives desdits paramètres, contenues dans des notifications provenant d'équipements périphériques dits d'entrée (EP-1) et de sortie (EP-2, EP-3), **caractérisé en ce qu'**il comprend i) des moyens de gestion (MG) agencés pour transmettre à des équipements périphériques (NE) choisis des définitions de filtre choisies, associées à des identifiants de filtre choisis, ii) des moyens de corrélation (MCN) agencés pour corréler chaque notification comportant un identifiant de filtre choisi, reçue d'un équipement périphérique d'entrée (EP-1), avec un jeu choisi de notifications reçues d'équipements périphériques de sortie (EP-2, EP-3) et comportant un identifiant de filtre présentant au moins un lien de parenté avec ledit identifiant de filtre choisi, de sorte que lesdits moyens de calcul (MCM) délivrent des mesures de paramètres à partir des valeurs contenues dans lesdites notifications corrélées.

4. Dispositif selon la revendication 3, **caractérisé en ce qu'**il comprend des moyens de configuration (MCF) agencés pour définir lesdits filtres en fonction d'identifiants de flux de trafics à filtrer et d'une désignation des équipements périphériques d'entrée et des équipements périphériques de sortie (EP-2, EP-3) au niveau desquels lesdits filtres doivent être utilisés.

5. Dispositif selon l'une des revendications 3 et 4, **caractérisé en ce qu'**il comprend des moyens d'ordonnancement (MOF) agencés pour attribuer à chaque filtre l'identifiant associé.

6. Dispositif selon l'une des revendications 3 à 5, **caractérisé en ce qu'**il comprend des premiers moyens de mémorisation (M1), couplés auxdits moyens de corrélation (MCN) et propres à stocker lesdits filtres selon une hiérarchie prenant en compte leurs liens de parenté et en correspondance de leurs identifiants de filtre respectifs.

7. Dispositif selon la combinaison des revendications 5 et 6, **caractérisé en ce que** lesdits moyens d'ordonnancement (MOF) sont agencés pour établir ladite hiérarchie entre lesdits filtres et pour communiquer auxdits premiers moyens de mémorisation (M1) lesdits flux hiérarchisés et les identifiants de filtre associés.

8. Dispositif selon l'une des revendications 3 à 7, **caractérisé en ce qu'**il comprend des moyens de collection (MCO) agencés pour recevoir lesdites notifications des équipements périphériques d'entrée (EP-1) et de sortie (EP-2, EP-3) et pour classer lesdites notifications reçues en fonction de leur origine.

9. Dispositif selon la revendication 8, **caractérisé en ce qu'**il comprend des seconds moyens de mémorisation (M2), couplés auxdits moyens de collection (MCO) et auxdits moyens de corrélation (MCN) et propres à stocker lesdites notifications en fonction de leur origine.

10. Dispositif selon la revendication 9, **caractérisé en ce que** lesdits moyens de corrélation (MCN) sont agencés pour extraire desdits seconds moyens de mémorisation (M2) une notification, dite d'entrée, dont l'origine correspond à un équipement périphérique d'entrée (EP-1) choisi, puis pour déterminer dans lesdits premiers moyens de mémorisation (M1) les identifiants de filtre présentant un lien de parenté avec l'identifiant de filtre de la notification extraite, puis pour extraire desdits seconds moyens de mémorisation (M2) les notifications, dites de sortie, dont l'origine correspond à un équipement périphérique de sortie (EP-2, EP-3) et comportant un identifiant de filtre présentant un lien de parenté avec celui de la notification d'entrée précédemment extraite, de manière à corréler ces notifications d'entrée et de sortie.

11. Dispositif selon la revendication 10, **caractérisé en ce que** lesdits moyens de corrélation (MCN) sont agencés pour sélectionner, en vue de ladite corrélation, certaines desdites notifications de sortie, stockées dans lesdits seconds moyens de mémorisation (M2), en fonction d'informations contenues dans une matrice de flux.

12. Dispositif selon l'une des revendications 9 à 11, **caractérisé en ce qu'**il comprend des moyens de mise à jour (MMJ) agencés pour supprimer desdits seconds moyens de mémorisation (M2) chaque notification de sortie correspondant à une date de transmission antérieure à la date de transmission d'une notification d'entrée objet d'une corrélation par lesdits moyens de corrélation (MCN).

13. Dispositif selon l'une des revendications 9 à 12, **caractérisé en ce qu'**il comprend des moyens de suppression agencés pour supprimer desdits seconds moyens de mémorisation (M2) des notifications d'entrée reçues depuis un délai prédéterminé.

14. Système de gestion de réseau (NMS) pour un réseau de communications orienté paquets comportant une multiplicité d'équipements périphériques (EP) selon la revendication 2, **caractérisé en ce qu'**il comprend un dispositif de gestion de mesures de paramètres (DGM) selon l'une des revendications 3 à 13.
